# EUROPEAN PATENT APPLICATION

(11) **EP 4 753 022 A2**
(43) Date of publication of application: **03.06.2026**
(21) Application number: 25213378.0
(22) Date of filing: 04.11.2025
(51) Int. Cl.: H01M 10/613, H01M 10/647, H01M 10/6554, H01M 10/6555, H01M 10/6556, H01M 50/291

(54) **COOLING FIN, BATTERY MODULE AND BATTERY MODULE ASSEMBLY INCLUDING SAME**

(30) Priority: 13.11.2024 KR 20240161230
(71) Applicant: SK Innovation Co., Ltd., Seoul 03188 (KR); SK On Co., Ltd., Seoul 03161 (KR)
(72) Inventor: PARK, Min Je, 34124 Daejeon (KR); LEE, Seok Hwan, 34124 Daejeon (KR)
(74) Representative: Prüfer & Partner mbB Patentanwälte · Rechtsanwälte

(57) **Abstract**

Proposed is a cooling fin including a cooling plate in which a cooling path is formed, and a support plate connected to each of upper and lower ends of the cooling plate, wherein the cooling plate comprises at least one cooling path configured to allow a cooling fluid to flow inside the cooling plate.

## Description

### BACKGROUND

### Technical Field

The present disclosure relates to a cooling fin, a battery module, and a battery module assembly including the same.

### Description of the Related Art

In recent years, as mobile devices such as mobile phones and laptops have become smaller and lighter, and electric vehicles and hybrid vehicles demand high-capacity power sources, a variety of batteries have been developed and are used.

In the case of secondary batteries, efficiency is becoming increasingly important depending on the application field, but problems such as heat generation and fires during charging or operation occur due to external factors.

Accordingly, technologies are being developed to increase the operating efficiency of secondary batteries and ensure safety. Moreover, a recent increase in electricity usage has led to increased carbon emissions and exacerbated global warming concerns, necessitating more efficient device operation mechanisms, improved cooling methods and maximization of cooling efficiency therefor.

### Document of Related Art

### (Patent Document 1) KR 10-0221057 B1

### SUMMARY

According to an aspect of the present disclosure, a cooling fin is provided that enables efficient operation of a battery module and device through efficient cooling of the battery module.

In addition, a battery module and a battery module assembly are provided, in which cooling efficiency and reliability are improved by cooling of the entire battery module along with cooling between battery cells using a cooling fin.

According to an aspect of the present disclosure, a cooling fin is provided, including: a cooling plate in which at least one cooling path is formed; and a support plate connected to each of upper and lower ends of the cooling plate, wherein the cooling plate comprises the at least one cooling path configured to allow a cooling fluid to flow inside the cooling plate.

In this case, the support plates may be provided in a flat shape parallel to upper and lower surfaces of the cooling plate.

In some embodiments, the cooling path may be provided to penetrate opposite ends of the cooling plate, so that the cooling fluid flows into a first end so as to flow inside the cooling plate and flow out from a second end.

According to an aspect of the present disclosure, a battery module is provided, including: a plurality of battery cells stacked in one direction; and a cooling fin coupled between stacked surfaces of the battery cells, wherein the cooling fin includes: a cooling plate coupled between the stacked surfaces of the battery cells and in which at least one cooling path is formed; and a support plate configured to extend from each of upper and lower ends of the cooling plate and cover upper and lower surfaces of adjacent battery cells, wherein the at least one cooling path is formed to extend in a direction along the stacked surfaces of the battery cells, and to penetrate the cooling plate in a direction of first ends and second ends of the stacked surfaces of the battery cells.

In this case, the battery module may further include a buffer pad coupled between the stacked surfaces of the battery cells, wherein the buffer pad and the cooling fin may be alternately coupled between the stacked surfaces of the battery cells.

According to an aspect of the present disclosure, a battery module assembly is provided, including: a battery module including a plurality of battery cells stacked in one direction, and a cooling fin coupled between stacked surfaces of the battery cells, wherein the cooling fin includes: a cooling plate coupled between the stacked surfaces of the battery cells and in which at least one cooling path is formed; and a support plate configured to extend from each of upper and lower ends of the cooling plate and cover upper and lower surfaces of adjacent battery cells, wherein the at least one cooling path is formed to extend in a direction along the stacked surfaces of the battery cells, and to penetrate in a direction of first ends and second ends of the stacked surfaces of the battery cells; and a casing configured to accommodate the battery module, wherein the casing may include: an inlet portion through which a cooling fluid flows in on a first side thereof; and an outlet portion through which a cooling fluid is discharged on a second side thereof.

In this case, a flow direction of a cooling fluid from the inlet portion to the outlet portion of the casing and a direction from a first end to a second end of the at least one cooling path of the cooling plate may be formed to be parallel.

In some embodiments, a space between the inlet portion of the casing and a first end of the battery module accommodated in the casing, and a space between the outlet portion of the casing and a second end of the battery module accommodated in the casing are configured to be filled with the cooling fluid.

In some embodiments, the battery module assembly further includes a buffer pad coupled between the stacked surfaces of the battery cells, wherein the buffer pad and the cooling fin may be alternately coupled between the stacked surfaces of the battery cells.

According to an aspect of the present disclosure, a vehicle is provided, including: a battery module and/or a battery module assembly, wherein the vehicle is an electric vehicle or a hybrid vehicle.

According to an aspect of the present disclosure, a method for operating a cooling fin (10) is provided, including: flowing a cooling fluid in at least one cooling path (13) to flow inside a cooling plate (12).

According to an aspect of the present disclosure, a method for operating a battery module is provided, including: flowing a cooling fluid in at least one cooling path (13) to flow inside a cooling plate (12).

In some embodiments, the cooling fluid may also flow in an outer space including the battery module.

According to an aspect of the present disclosure, a method for operating a battery module assembly (1) is provided, including: flowing a cooling fluid in at least one cooling path (13) to flow inside a cooling plate (12).

In some embodiments, the cooling fluid may flow into a casing (40) on a first side thereof through an inlet portion (41), and may be discharged from the casing (40) on a second side thereof through an outlet portion (42).

The features and advantages of the present disclosure will become more apparent from the following detailed description based on the accompanying drawings.

Prior to this, terms or words used in this specification and claims should not be construed in their usual, dictionary meaning, and should be interpreted with meaning and concept consistent with the technical idea of the present disclosure on the basis of the principle that the inventor can define terminology appropriately to explain his or her invention in the best way possible.

According to an embodiment of the present disclosure, the cooling efficiency of secondary battery cell modules can be improved.

Furthermore, by allowing a cooling fluid to flow in the outer space including a battery module, the reliability and efficiency of cooling of a battery module assembly can be improved by overall cooling of the inside and outside of the battery module.

Furthermore, by maximizing the cooling efficiency of a battery module and increasing the energy efficiency of battery module cooling, power consumption can be reduced and carbon emissions from the operation of related devices can be reduced.

Furthermore, by blocking heat transfer between battery cells due to fire inside a battery module in advance, the risk of battery module explosion, etc., can be effectively reduced.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is a front view of a cooling fin according to an embodiment of the present disclosure;
FIG. 2 is a perspective view of a cooling fin according to an embodiment of the present disclosure;
FIG. 3 is a perspective view of a portion of a battery module according to an embodiment of the present disclosure;
FIG. 4 is a front view of a portion of a battery module according to an embodiment of the present disclosure; and
FIG. 5 is a perspective view of a battery module assembly according to an embodiment of the present disclosure.

### DETAILED DESCRIPTION

Terms used to describe an embodiment of the present disclosure are not intended to limit the disclosure. It should be noted that singular expressions include plural expressions unless the context clearly dictates otherwise.

It should be noted that, in assigning reference numerals to components in the drawings, identical components are assigned the same reference numerals as much as possible even if they are shown in different drawings, and similar reference numbers are assigned to similar components.

The drawings may be schematic or exaggerated for the purpose of illustrating the embodiments. In this document, expressions such as "comprise", "may comprise", "have", "may have", "include", or "may include" refer to the presence of the corresponding feature (e.g., a numerical value, function, operation, or component such as a part), and do not exclude the presence of additional features.

Terms such as "one", "other", "another", "first", "second", etc., are used to distinguish one component from another component, and the components are not limited by the terms.

Terms such as "upper", "lower", "top", "bottom", etc., are used with reference to the respective positions shown in the drawings for representing a positional relationship in the given context.

Hereinafter, an embodiment of the present disclosure will be described in detail with reference to the attached drawings.

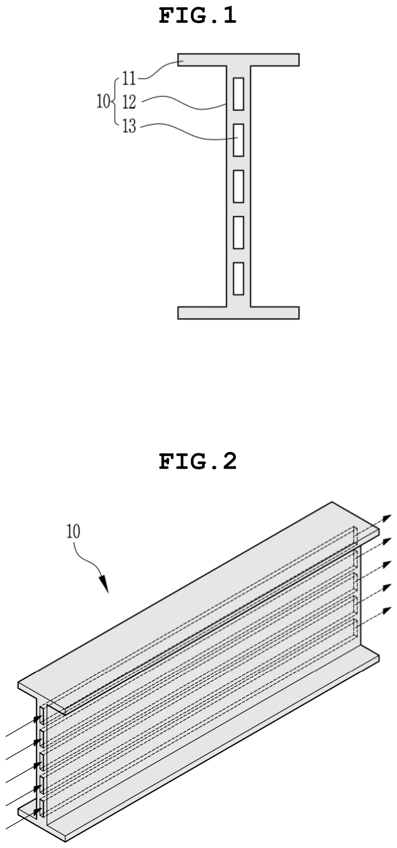

FIG. 1 is a front view of a cooling fin according to an embodiment of the present disclosure, and FIG. 2 is a perspective view of a cooling fin according to an embodiment of the present disclosure.

A cooling fin 10 according to an embodiment of the present disclosure may include: a cooling plate 12 in which a at least one cooling path 13 is formed; and a support plate 11 connected to an upper end of the cooling plate 12, and a further support plate 11 connected to a lower end of the cooling plate 12. The cooling plate 12 may comprise at least one cooling path 13 configured to allow a cooling fluid to flow inside the cooling plate 12.

As shown in FIG. 1, the cooling fin 10 may be provided with the cooling plate 12 in which the cooling path 13 is formed, and support plates 11 may be combined at the top and bottom of the cooling plate 12. The cooling plate 12 and the support plates 11 may be combined separately or formed as one piece.

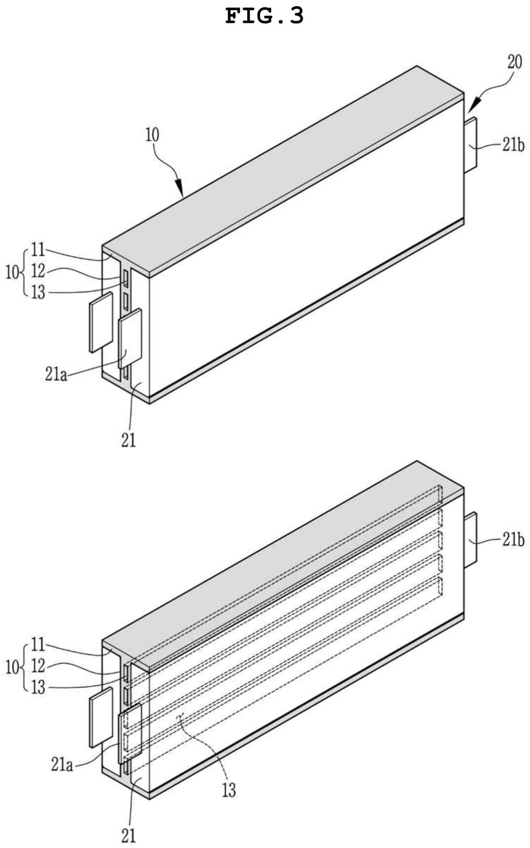

When forming a battery module, the cooling plate 12 may be coupled between a battery cell 20 and a further battery cell 20 (Fig. 3), and may be in surface contact with the stacked surface of the battery cell body 21 via a surface extending in a direction to cool the battery cells 20.

At least one cooling path 13 may be formed in the cooling plate 12, and when a plurality of cooling paths 13 are formed, they may be spaced apart from each other. Since the size or number of the cooling paths 13 is not particularly limited, cooling paths 13 of different sizes may be formed. If necessary, a single cooling path 13 may be formed in the cooling plate 12.

The support plates 11 may be provided in a flat shape parallel to the upper and lower surfaces of the cooling plate 12. When the cooling plate 12 is coupled between battery cells 20, the support plates 11 may support and cover both sides of the upper and lower surfaces of adjacent battery cells 20. Accordingly, the upper and lower surfaces of the battery cells 20 are surfaces of the battery cells 20 extending from the stacked surfaces of the battery cells 20 and in a direction of the at least one cooling paths 13. Thus, in Fig. 3, the upper and lower ends of the cooling plate 12, respectively, are arranged in a direction perpendicular to a stacking direction of the battery cells 20 and in parallel to the upper and lower surfaces of the battery cells 20.

The support plates 11 may be formed integrally with the cooling plate 12, and may be made of a material having high thermal conductivity so as to perform the function of cooling the upper and lower surfaces of the battery cell 20 while covering the upper and lower surfaces of the battery cell 20.

As shown in FIG. 2, the cooling plate 12 may be configured such that the cooling path 13 passes through opposite ends thereof in order for a cooling fluid flowing inside the cooling plate 12 to flow into one end in the flow direction of the cooling fluid and flow out of the other end in the flow direction of the cooling fluid.

That is, when the cooling plate 12 is combined so that battery cells 20 are in contact therewith on opposite sides of the cooling plate 12, a cooling effect may occur at the surface where the cooling plate 12 and a battery cell body 21 (Fig. 3) come into contact by the cooling fluid flowing inside the cooling plate 12. The cooling plate 12 may be combined between battery cells 20 with a minimum volume while simultaneously covering the entire stacked surface of the battery cell bodies 21.

The cooling path 13 of the cooling plate 12 is formed to penetrate both longitudinal ends of the cooling plate 12, so that the cooling fluid can be continuously circulated, thereby increasing the cooling efficiency of battery cells 20. The longitudinal ends of the cooling plate 12 relate to the ends of the cooling plate 12 extending between the support plates 11 with respect to the cooling plate 12 extending in a longitudinal direction.

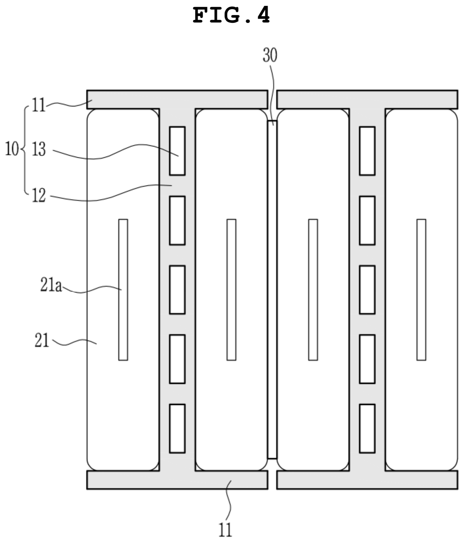

FIG. 3 is a perspective view of a portion of a battery module according to an embodiment of the present disclosure, and FIG. 4 is a front view of a portion of a battery module according to an embodiment of the present disclosure.

A battery module including a cooling fin 10 according to an embodiment of the present disclosure may include: a plurality of battery cells 20 stacked in one direction; and the cooling fin 10 coupled between the stacked surfaces of the battery cells 20. The cooling fin 10 may include: a cooling plate 12 coupled between the stacked surfaces of the battery cells 20 and in which a cooling path 13 is formed; and support plates 11 provided to extend from the top and bottom of the cooling plate 12 and covering the upper and lower surfaces of the adjacent battery cells 20. The cooling path 13 is formed to extend in one direction of the stacked surface of the battery cells 20, and to penetrate in a direction of one end and the other end of the stacked surface of the battery cells 20.

The battery cell 20 may be provided with a first tab portion 21a and a second tab portion 21b at opposite ends, respectively, of the battery cell body 21. Fig. 3 shows the opposite ends as opposite ends in a longitudinal direction of the battery cell body 21. The first tab portion 21a and the second tab portion 21b may be formed with different polarities of a negative electrode and a positive electrode. However, the form of the tab joint of the battery cell 20 is not limited to the illustrated example, and the formation positions of the first tab portion 21a and the second tab portion 21b may be designed and changed within a normal range. For example, both the first tab portion and the second tab portion may be formed at one end of the battery cell body 21.

In addition, the disclosed battery cell 20 includes a pouch-type secondary battery format, and may include various battery shapes such as cylindrical or square, and the cooling fin according to an embodiment of the present disclosure may be applied by appropriate structural changes according to each battery shape.

As shown in FIG. 3, when a plurality of battery cells 20 are stacked in one direction, the cooling fin 10 may be combined between the stacked surfaces of the battery cells 20.

The cooling fin 10 may include the cooling plate 12 coupled between the stacked surfaces of the battery cells 20, and the support plates 11 that cover each of the upper and lower surfaces of the battery cells 20 in opposite directions of the stacked surfaces.

As shown in the upper drawing in FIG. 3, the cooling plate 12 is combined with the stacked surfaces of the battery cell bodies 21, and may cool the battery cell 20 that is in contact with the cooling plate 12 by means of the cooling path 13 in which a cooling fluid flows.

At least one cooling path 13 may be formed between the top and bottom of the cooling plate 12, and the size, arrangement, and number of cooling paths 13 may be appropriately designed and changed according to the battery module to which the cooling path 13 is applied.

Since the cooling fin 10 coupled to the battery module according to an embodiment of the present disclosure is substantially the same in configuration and function as the cooling fin 10 according to an embodiment of the present disclosure already described above, redundant description will be omitted.

As shown in FIG. 4, a buffer pad 30 is coupled between the stacked surfaces of the battery cells 20, and the buffer pad 30 and the cooling fin 10 may be alternately coupled between the stacked surfaces of the battery cells 20.

The buffer pad 30 may flexibly respond to expansion of the battery cell 20 of the battery module and the like, and effectively buffer pressure changes within the battery module. The buffer pad 30 may be coupled to the stacked surfaces between the battery cells 20, and the thickness and material of the buffer pad 30 may be applied as long as it possesses appropriate elasticity. The buffer pad 30 is coupled with a predetermined thickness so that when one of the battery cells 20 expands due to overheating or other reasons, the reliability of the operation of the battery cell 20 may be stably secured through an appropriate buffering action.

In addition, by applying an insulating material, the buffer pad 30 may block heat transfer between battery cells 20 in advance. In this case, by preventing heat transfer and thermal runaway to an adjacent battery cell 20 due to an explosion or fire from one battery cell 20, the risk of fire in the entire battery module may be reduced or effectively prevented.

In addition, although not shown, the buffer pad 30 may be coupled to the stacked surfaces between the battery cells 20 separately from the cooling fin 10, but may also be coupled to one of the two sides of the cooling plate 12.

Alternatively, the cooling plate 12 may be manufactured and applied as an integral part including different materials by applying an insulating material to block heat transfer to one side of the cooling plate 12 and applying a material that facilitates heat transfer to the other side.

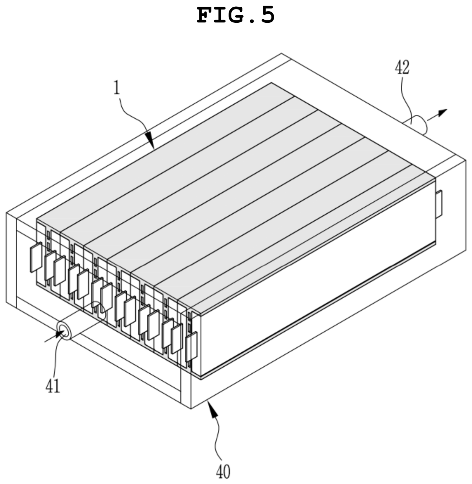

FIG. 5 is a perspective view of a battery module assembly according to an embodiment of the present disclosure.

A battery module assembly 1 according to an embodiment of the present disclosure may include: a battery module including a plurality of battery cells 20 stacked in one direction and a cooling fin 10 coupled between the stacked surfaces of the battery cells 20. The cooling fin 10 may include: a cooling plate 12 coupled between the stacked surfaces of the battery cells 20 and in which a cooling path 13 is formed; and a support plate 11 provided to extend from the top and bottom of the cooling plate 12 and covering the upper and lower surfaces of the adjacent battery cells 20. The cooling path 13 is formed to extend in one direction of the stacked surface of the battery cells 20, and to penetrate in a direction of one end and the other end of the stacked surface of the battery cells 20. The assembly 1 may further include a casing 40 that accommodates the battery module, and the casing 40 may have: an inlet portion 41 through which a cooling fluid flows in on one side thereof; and an outlet portion 42 through which a cooling fluid is discharged on the other side thereof.

The battery module may be formed by stacking and combining the plurality of battery cells 20 in one direction. The cooling fin 10 may be coupled between the stacked surfaces of the battery cells 20 to cool the battery cells 20. The cooling fin 10 is coupled between the stacked surfaces of the battery cells 20, and one cooling fin 10 is coupled to every two battery cells 20, so that the stacking thickness or cooling efficiency of the battery module may be appropriately adjusted. The cooling fin 10 may be coupled and applied between each stacked surface of the battery cells as needed.

The battery module assembly 1 according to an embodiment of the present disclosure may further include the casing 40 that accommodates the battery module.

The casing 40 accommodates the battery module, and may be provided with the inlet portion 41 through which a cooling fluid flows in and an outlet portion 42 through which a cooling fluid is discharged to the outside.

The flow direction of the cooling fluid from the inlet portion 41 to the outlet portion 42 of the casing 40 and the direction from one end to the other end of the cooling path 13 formed in the cooling plate 12 may be formed to be parallel. Due to this, by allowing the cooling fluid flowing into the inlet portion 41 to naturally pass through the cooling path 13 of the cooling plate 12 coupled to the battery module, the flow of the cooling fluid may be induced more effectively, thereby increasing the cooling efficiency of the battery module.

By appropriately changing and adjusting the number or shape of the inlet portion 41, the amount or speed of the cooling fluid passing through the at least one cooling path 13 formed in the cooling plate 12 may be controlled.

As shown in FIG. 5, a space between the inlet portion 41 of the casing 40 and one end of the battery module accommodated in the casing 40, and a space between the outlet portion 42 of the casing 40 and the other end of the battery module accommodated in the casing 40 may be maintained to be filled with the cooling fluid, so that the outer surfaces of the front and rear of the battery module may be cooled by direct cooling.

That is, since a bus bar included in the battery module assembly and the tab portions 21a and 21b of the battery cell 20 can all be directly cooled, the overall cooling effect of the battery module assembly may be maximized.

Since the cooling fin 10 and the battery module included in the battery module assembly 1 according to an embodiment of the present disclosure are substantially the same in configuration and function as the cooling fin 10 and the battery module according to an embodiment of the present disclosure already described above, redundant description will be omitted.

Above, the present disclosure has been described in detail through specific embodiments. The embodiments are for specifically explaining the present disclosure, and are only illustrative and do not limit the scope of the appended claims. It is obvious to those skilled in the art that various changes and modifications to the embodiments are possible within the scope and technical idea of the present disclosure, and it is natural that such changes and modifications fall within the scope of the appended claims.

## Claims

1. A cooling fin (10) comprising:
a cooling plate (12) in which at least one cooling path (13) is formed; and
support plates (11) connected to upper and lower ends of the cooling plate, respectively,
wherein the at least one cooling path (13) is configured to allow a cooling fluid to flow inside the cooling plate (12).

2. The cooling fin (10) of claim 1, wherein the support plates (11) are provided in a flat shape parallel to upper and lower surfaces of the cooling plate (12), respectively.

3. The cooling fin (10) of claim 1 or 2, wherein the at least one cooling path (13) is provided to penetrate opposite ends of the cooling plate (12), so that the cooling fluid flows into a first end so as to flow inside the cooling plate (12) and flows out from a second end.

4. A battery module comprising:
a plurality of battery cells (20) stacked in one direction; and
a cooling fin (10) coupled between stacked surfaces of the battery cells (20),
wherein the cooling fin (10) comprises:
a cooling plate (12) coupled between the stacked surfaces of the battery cells (20) and in which at least one cooling path (13) is formed; and
support plates (11) configured to extend from upper and lower ends of the cooling plate and cover upper and lower surfaces of adjacent battery cells (20), respectively,
wherein the cooling path (13) is formed to extend in a direction along the stacked surfaces of the battery cells (20), and to penetrate the cooling plate (12) in a direction of first ends and second ends of the stacked surfaces of the battery cells (20).

5. The battery module of claim 4, further comprising:
a buffer pad (30) coupled between the stacked surfaces of the battery cells (20),
wherein the buffer pad (30) and the cooling fin (10) are alternately coupled between the stacked surfaces of the battery cells (20).

6. A battery module assembly (1) comprising:
a battery module comprising a plurality of battery cells (20) stacked in one direction, and a cooling fin (10) coupled between stacked surfaces of the battery cells (20), wherein the cooling fin (10) comprises: a cooling plate (12) coupled between the stacked surfaces of the battery cells (20) and in which at least one cooling path (13) is formed; and a support plate (11) configured to extend from upper and lower ends of the cooling plate and cover upper and lower surfaces of adjacent battery cells (20), respectively, wherein the at least one cooling path (13) is formed to extend in a direction of the stacked surfaces along the battery cells (20), and to penetrate the cooling plate (12) in a direction of first ends and second ends of the stacked surfaces of the battery cells (20); and
a casing (40) configured to accommodate the battery module,
wherein the casing (40) comprises:
an inlet portion (41) through which a cooling fluid flows into the casing (40) on a first side thereof; and
an outlet portion (42) through which a cooling fluid is discharged from the casing (40) on a second side thereof.

7. The battery module assembly (1) of claim 6, wherein a flow direction of a cooling fluid from the inlet portion (41) to the outlet portion (42) of the casing (40) and a direction from a first end to a second end of the at least one cooling path (13) of the cooling plate (12) are formed to be parallel.

8. The battery module assembly (1) of claim 6 or 7, wherein a space between the inlet portion (41) of the casing (40) and a first end of the battery module accommodated in the casing (40), and a space between the outlet portion (42) of the casing (40) and a second end of the battery module accommodated in the casing (40) are configured to be filled with the cooling fluid.

9. The battery module assembly (1) of any one of claims 6 to 8, further comprising:
a buffer pad (30) coupled between the stacked surfaces of the battery cells (20),
wherein the buffer pad (30) and the cooling fin (10) are alternately coupled between the stacked surfaces of the battery cells (20).

10. A vehicle comprising a battery module according to claim 4 or 5 and/or a battery module assembly (1) according to any one of the claims 6 to 9, wherein the vehicle is an electric vehicle or a hybrid vehicle.

11. A method for operating a cooling fin (10) according to any one of the claims 1 to 3, wherein a cooling fluid is flowed in at least one cooling path (13) to flow inside the cooling plate (12).

12. A method for operating a battery module according to claim 4 or 5, wherein a cooling fluid is flowed in at least one cooling path (13) to flow inside the cooling plate (12).

13. The method according to claim 12, wherein the cooling fluid is also flowed in an outer space including the battery module.

14. A method for operating a battery module assembly (1) according to any one of the claims 6 to 9, wherein a cooling fluid is flowed in at least one cooling path (13) to flow inside the cooling plate (12).

15. The method according to claim 14, wherein the cooling fluid is flowed into the casing (40) on a first side thereof through the inlet portion (41), and the cooling fluid is discharged from the casing (40) on a second side thereof through the outlet portion (42).
